(19) Europäisches Patentamt
European Patent Office
Office européen des brevets

(11) Publication number: 0 072 621
B1

(12) EUROPEAN PATENT SPECIFICATION

(45) Date of publication of patent specification: 24.04.85

(51) Int. Cl.⁴: C 09 B 69/00, C 09 B 29/045 // D06P5/13

(21) Application number: 82303648.8

(22) Date of filing: 12.07.82

# (54) Alkyleneoxy compounds, their preparation and their use as fugitive tints.

(30) Priority: 13.07.81 US 282456

(43) Date of publication of application: 23.02.83 Bulletin 83/08

(45) Publication of the grant of the patent: 24.04.85 Bulletin 85/17

(84) Designated Contracting States: AT BE CH DE FR GB IT LI LU NL SE

(56) References cited:
FR-A-2 442 258
GB-A-2 029 438
US-A-2 359 305
US-A-3 157 633
US-A-3 449 319

(73) Proprietor: MILLIKEN RESEARCH CORPORATION
Iron Ore Road
Spartanburg South Carolina 29304 (US)

(72) Inventor: Keller, Margaret Susan
8 Forestview Drive
Inman South Carolina 29349 (US)
Inventor: Brendle, Ralph Noble
Route 8 Grouse Lane
Spartanburg South Carolina 29303 (US)

(74) Representative: Perry, Robert Edward et al
GILL JENNINGS & EVERY 53-64 Chancery Lane
London WC2A 1HN (GB)

EP 0 072 621 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to novel alkyleneoxy compounds which can have utility as fugitive tints, and to their preparation.

In order to identify synthetic and natural fibres during textile processing operations such as spinning and weaving, the fibres may be marked or colour-coded with a tint which can be easily removed at the desired time during some subsequent operation. Such tints are generally referred to as fugitive tints.

US Patent Specification No. 3,157,633 describes polyethylene oxide fugitive tints which have achieved wide acceptance in the textile industry. Such tints are a combination of a dyestuff radical and one or more polyethyleneoxy groups. Dyestuff radicals which are disclosed include nitroso, nitro, azo, diphenylmethane, triphenylmethane, xanthene, acridene, methine, thiazole, indamine, azine, oxazine and anthraquinone radicals. Preferably, such radicals are attached to the polymeric constituent of the tint compositions by an amino nitrogen.

Fugitive tints of the type disclosed in US Patent Specification No. 3,157,633 have generally been classified as water-fugitive or solvent-fugitive. For example, tints containing one or more polyethyleneoxy groups containing at least 20 repeating ethyleneoxy units in the molecule are generally considered water-fugitive tints; tints containing one or more polypropyleneoxy groups having similar repeating propyleneoxy units in the molecule are considered solvent-fugitive. The choice of tint has depended largely upon the finishing operations conducted on the fibres and the fugitive properties of the tint.

Fugitive tints should be easily and substantially completely removed, even after exposure to extreme conditions which may be encountered during processing of the colour-coded textile material. In addition, the tint should have good colour stability, to minimise fading, during exposure to heat and/or light, which may occur during processing of the tinted fibres prior to the intentional removal of the tint.

While fugitive tints having such characteristics have been produced in a wide variety of shades, deficiencies in heat and/or light stability or in universal fugitive characteristics have been apparent for the red and blue or purple colours, and in related shades such as brown, grey, green and orange. Presently available red fugitive tints are perhaps not as truly "red" as might be desirable.

Novel compounds according to the present invention have the formula

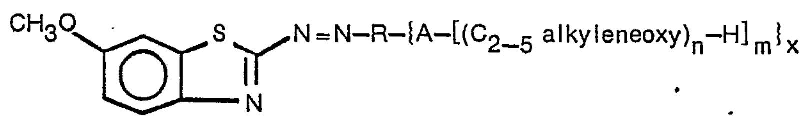

wherein R is $C_{6-24}$ arylene; *m* is 1 or 2; A is either O, S or $CO_2$ (in which case *m* is 1) or N (in which case *m* is 2); *n* is an integer of from 2 to 400; x is an integer of from 1 to 6; and $n.m.x \leq 500$.

A is preferably N. R is preferably a *meta*-toluidine, *meta*-aminophenol or aniline radical where a red dye is desired, or a 2,5-dimethoxyaniline radical where a purple dye is desired.

The alkylene radical, in each of the *n* alkyleneoxy radicals, may contain from 2 to 4 carbon atoms. Where water-fugitivity is desired, the alkylene radical may consist solely or substantially of two carbon atoms. Where other properties such as non-polar solvent fugitivity are desired, the alkylene radical may contain more than two carbon atoms. Alkyleneoxy copolymers such as ethyleneoxy-propyleneoxy or ethyleneoxy-butyleneoxy copolymers, or block copolymers thereof, can be employed as the alkyleneoxy constituent of the fugitive tints of the present invention. When employing an ethyleneoxy-propyleneoxy copolymer where, for instance, both non-polar solubility and water-solubility are desired, ethyleneoxy units generally may comprise from 25 to 75 mole percent of the polymer chains, with propyleneoxy units being the remainder.

The present invention also relates to a process for preparing fugitive tints such as the novel compound. A suitable intermediate, e.g. an aromatic compound containing from 6 to 24 carbon atoms and at least one A, or linking, moiety, is converted in a first step into a corresponding alkylene oxide-containing compound. This may be accomplished by simply bubbling an appropriate alkylene oxide through a reactor containing the aromatic compound in the liquid phase. If the aromatic compound is a solid under ambient conditions, it may be melted by heating. After reaction of the appropriate number of alkylene oxide equivalents, the corresponding hydroxyalkylated compound will usually have been formed. Examples of suitable hydroxyalkylated compounds are N,N-dihyroxyethyl-aminophenol, N,N-dihydroxyethyl-aniline and N,N-dihydroxyethyl-2,5-dimethoxyaniline.

The corresponding hydroxyalkylated compound may then be reacted with further quantities of alkylene oxide, by adding an appropriate basic catalyst, e.g. potassium hydroxide, to the reactor, and then adding further quantities of alkylene oxide to obtain the desired alkyleneoxy constituent for the hydroxyalkylated compound and, ultimately, the fugitive tint.

In a separate step, a diazo compound may be formed by reacting a diazo precursor compound, e.g. 2-amino-6-methoxybenzothiazole, with a suitable diazo-forming reactant such as nitrosylsulphuric acid, in the presence of, for instance, a strong mineral acid, e.g., phosphoric or sulphuric acid, under appropriate conditions, e.g. from −20 to 10, preferably −10 to 5°C, e.g., at atmospheric pressure, with suitable agitation.

It is desirable that no more than 10% of water, by weight based upon the weight of the reaction mixture, should be present during formation of the diazo compound. Larger quantities of water may break down the diazo-forming reactant. Conversely, in the absence of a polar solvent, the reaction mixture may become extremely viscous at appropriate reaction temperatures, causing poor heat transfer throughout the mixture, so that sections of the mixture may rise to undesirably high temperatures of, for instance, above 5 or 10°C, causing decomposition of the desired diazo compound. Accordingly, the presence of appropriate quantities of a strong mineral acid, such as phosphoric or sulphuric acid, in the reaction mixture is recommended. The viscosity of the reaction mixture during diazo formation can thus be reduced to less than 12,000 centipoises (12 Pa.s), as determined by a Brookfield viscometer Model LV No. 4 spindle at 30 speed. The amount of strong mineral acid provided may be from 0.1 to 1 part by weight, based on the amount of 2-amino-6-methoxybenzothiazole.

While strong mineral acid has previously been suggested for use as a solvent in a diazotisation reaction to prepare dyestuffs, i.e. non-water-soluble material, it is usually employed in much larger quantities than are used in the present invention. If such large quantities were to be employed in the process of the present invention, it would be necessary as a practical matter to neutralise the acid, after coupling the diazo compound with the aromatic group-containing moiety, resulting in the presence of large and undesirable amounts of inseparable, water-soluble V salts in the fugitive tint product. The presence of such salts in the product would render it undesirable for use in, for instance, textile processing operations, owing to corrosion problems, build-up of salt deposits on the equipment used, and incompatibility with other fibre finishes typically employed in textile finishing operations. The amount of such salts in the fugitive tint product should be such that the ash level in the product is less than 3, and preferably less than 1, % based on the total weight of the fugitive tint product (which generally contains from 10 to 30% of the tint compound) in aqueous solution.

External cooling of the reaction may be required, to maintain the desired temperature of the reaction mixture during the exothermic reaction. The temperature of the reaction mixture may further be controlled by control of the rate of charging the 2-amino-6-methoxybenzothiazole to the reaction vessel containing the other reactants.

After formation of the diazo compound (e.g. of 2-amino-6-methoxybenzothiazole) and the alkyleneoxy-substituted aromatic compound, they are coupled. This may conveniently be accomplished by first diluting the alkyleneoxy-substituted aromatic compound, especially if it is a solid, with water. The solution may then be added to a suitable reaction vessel wherein the pH may be adjusted to from 2 to 4 by adding a suitable acid such as sulphuric acid. The reaction mixture may then be cooled to from −10 to 20, preferably 0 to 10, °C, whereupon the diazo compound may be added, with agitation of the reaction mixture, in an amount of from 0.005 to 1, preferably 0.01 to 0.1, part by weight based on the weight of alkyleneoxy-substituted aromatic compound present in the reaction mixture. Then, if desired, the pH of the crude reaction product may be adjusted to stabilise the product at a neutral or slightly basic pH and additional water may be added to achieve the desired concentration of the final product.

Alkyleneoxy-substituted aromatic compounds which can be used in the process of the invention and prepared, for example, by the procedure described above, include the following:

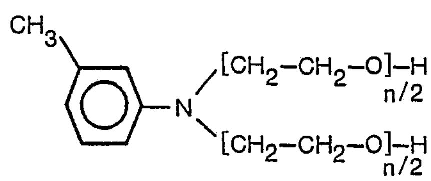

I

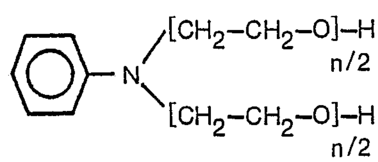

II

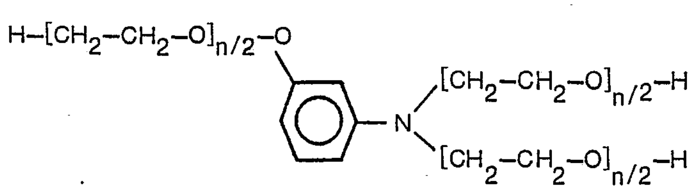

III

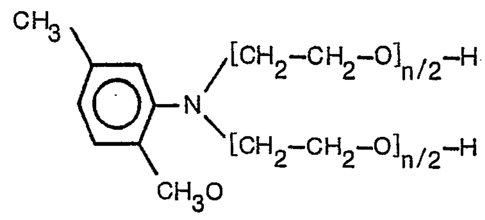

IV

wherein *n* is as defined herein.

Compounds I, II and III may be coupled with the diazo compound to provide a red fugitive tint. Compound IV may be coupled to provide a purple fugitive tint.

The following Examples 1 to 6 illustrate various steps of the preparation, and Examples 7 and 9 the use, of compounds of the present invention. Examples 8 and 9 (in part) are comparative.

Example 1

A dye intermediate was prepared by bubbling ethylene oxide into 107 g molten meta-toluidene at 150°C and 50 psig (3.5 bar) until two molar equivalents of ethylene oxide were absorbed. 195 g N,N-dihydroxyethyl-m-toluidene were produced. 2 g potassium hydroxide were then added to the above product, followed by 228 moles ethylene oxide, resulting in a total of about 10,227 g of a 230 molar meta-toluidene product of the formula corresponding to formula I above, where *n* is 230.

Examples 2—4

Example 1 was repeated to prepare dye intermediates corresponding to formulae II (Example 2), III (Example 3) and IV (Example 4) above, where *n* in each instance is 230.

Example 5

92 g nitrosylsulphuric acid and 10 g phosphoric acid were charged to a 250 millilitre glass vessel which was provided with good agitation and cooling means. This reaction mixture was cooled to 0°C, whereupon 48 g 2-amino-6-methoxybenzothiazole were charged to the mixture of acids at a rate such that the temperature was maintained at 0—5°C. 150 g of solution containing the diazo product was prepared.

Example 6

2932 g of a solid, active intermediate made according to Example 1 were diluted with water to a concentration of 55% by weight and charged to a vessel with cooling and agitation means. The pH of the solution was adjusted to 2.8 to 3.2 by adding concentrated sulphuric acid. The mixture was then cooled to 0—5°C, whereupon 150 g of the diazo-containing solution prepared in Example 5 (estimated to contain 51.2 g actual diazo product) were added over a five-minute period. The pH was adjusted to 7.5 to 8.5 with sodium hydroxide and 12,500 g water were added. The product obtained was a red fugitive tint having an absorptivity (visible spectrum) of 0.6 ± 0.05.

Example 7

340 g of a fugitive tint prepared as in Example 6, diluted in 410 l water, were applied to 136 kg nylon 6 fibre, by means of a spray nozzle, as the fibre was being blended. The fibres were processed into yarn. A portion of these fibres was subjected to typical steam autoclaving conditions normally encountered in the manufacture of carpeting, i.e. 132°C for about 30 minutes. The yarn was then tufted into a carpet backing, scoured with water at 24°C for 30 seconds, and all observable colour provided by the tint was removed.

Example 8

The procedure of Example 7 was repeated, with the exception that the tint employed was Versatint, (which may be a registered Trade Mark) Red N—6 Fugitive Tint, available from Milliken Chemical, South Carolina, United States of America, and prepared by the procedure of Example 5 of US Patent Specification No. 3,157,633.

After scouring, the yarn was estimated by observation to have retained 10 to 20% of the colour of the tint originally imparted to the yarn.

Yarn products of Examples 7 and 8 were run side-by-side through a heat-setting apparatus (dry heat conditions), at 215°C for one minute. The yarn of Example 7 remained red, with only slight observable colour change, while that of Example 8 changed to a beige colour. This colour change may result in problems when the yarn is further processed. In particular, the yarn may not be identifiable by its fugitive colour (which is the purpose of a fugitive tint in textile processing); rather, if its colour has changed, it may be confused with yarns emanating from a different source or batch or even yarns of different chemical composition.

After heat-setting, each of the yarns was scoured with water at 24°C for 30 seconds. The product of Example 7 showed no observable remaining traces of the tint. The product of Example 8 remaining noticeably stained.

Example 9

Three samples of nylon fibres were prepared. Samples A and B were tinted with commercial blue and purple fugitive tints, Versatint Blue N—6 and Versatint Purple N—6 (available from Milliken Chemical). Sample C was tinted with a purple tint prepared according to Examples 1, 5 and 6. All of the samples were then exposed to fluorescent light at a distance of about 760 mm from the source. After 4 days, no colour was visible on Sample A. After 14 days, the colour of Sample B had shifted to a reddish, significantly lighter colour. Sample C showed no significant colour change after 21 days.

**Claims**

1. A compound of the formula:

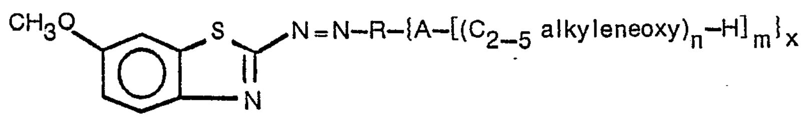

wherein R is $C_{6-24}$ arylene; *m* is 1 or 2; A is either O, S or $CO_2$ (in which case *m* is 1) or N (in which case *m* is 2); *n* is an integer of from 2 to 400; *x* is an integer of from 1 to 6; and $n.m.x \leq 500$.

2. A compound as claimed in claim 1, wherein the alkyleneoxy constituent is ethyleneoxy or propyleneoxy, or a mixture thereof.

3. A compound as claimed in claim 1, wherein A is N, the alkyleneoxy constituent is ethyleneoxy, and R is selected from meta-toluidene, meta-aminophenol and aniline radicals.

4. A compound as claimed in claim 1, wherein A is N, the alkylene constituent is ethyleneoxy, and R is a 3,5-dimethoxyaniline radical.

5. A compound as claimed in claim 3, wherein the R is a metatoluidene radical.

6. A process for preparing a fugitive tint compound, which comprises reacting a diazo precursor compound with a diazo-forming reactant, in the presence of a strong mineral acid and less than 10% w/w water, based on the weight of the reaction mixture, and in which the visocosity of the reaction mixture is less than 12,000 cps (12 Pa.s); and coupling the resultant diazo compound with an aromatic, alkylene oxide-containing compound.

7. A process according to claim 6, wherein the diazo precursor compound is 2-amino-6-methoxy-benzothiazole.

8. A process according to claim 6 or claim 7, wherein the diazo-forming reactant is nitrosylsulphuric acid.

9. A process for preparing a fugitive tint compound, which comprises reacting 2-amino-6-methoxybenzothiazole with nitrosylsulphuric acid, in the presence of less than 10% w/w water, based upon the total weight of the reaction mixture, and in the presence of 0.1 to 1 parts by weight of a strong mineral acid, per part by weight of the 2-amino-6-methoxybenzothiazole, to form a diazo compound; reacting an aromatic compound containing from 6 to 24 carbon atoms and at least one linking moiety selected from N, O, S and $CO_2$, with a $C_{2-5}$ alkylene oxide in an amount sufficient to provide from 2 to 400 alkylene oxide units on said compound, to form an alkylene oxide-containing compound; and coupling the diazo compound and the alkylene oxide-containing compound at from −10 to 20°C and at a pH of from 2 to 4.

10. A process according to any of claims 6 to 9, wherein the mineral acid is phosphoric acid.

**Revendications**

1. Composé de formule:

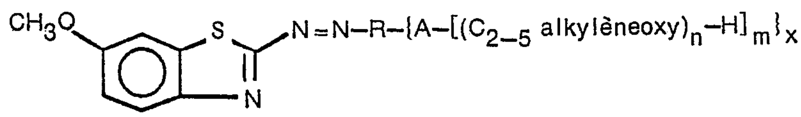

où R est $C_{6-24}$ arylène; *m* est 1 ou 2; A est soit O, S ou $CO_2$ (auquel cas *m* est 1) ou N (auquel cas *m* est 2); *n* est un entier de 2 à 400; *x* est un entier de 1 à 6; et $n.m.x. \leq$ à 500.

2. Composé selon la revendication 1, caractérisé en ce que le constituant alkylèneoxy est l'éthylèneoxy ou le propylèneoxy, ou un de leur mélange.

3. Composé selon la revendication 1, caractérisé en ce que A est N, le constituant alkylèneoxy est l'éthylèneoxy, et R est choisi parmi les radicaux méta-toluidène, métaaminophénol et aniline.

4. Composé selon la revendication 1, caractérisé en ce que A est N, le constituant alkylèneoxy est l'éthylèneoxy, et R est le radical 3,5-diméthoxyaniline.

5. Composé selon la revendication 3, caractérisé en ce que R est le radical meta-toluidène.

6. Procédé de préparation d'un composé de teinture fugace, caractérisé en ce qu'on fait réagir un composé précurseur diazo avec un réactif formant le diazo en présence d'un acide minéral fort et avec une

quantité d'eau inférieur à 10% au poids, basée sur le poids du mélange réactionnel, et en ce que la viscosité du mélange réactionnel est inférieure à 12'000 cps (12 Pa.S), puis en ce qu'on copule le composé diazo résultant avec un composé aromatique contenant l'oxyde d'alkylène.

7. Procédé selon la revendication 6, caractérisé en ce que le composé précurseur diazo est le 2-amino-5-méthoxybenzothiazole.

8. Procédé selon la revendication 6 ou 7 caractérisé en ce que le réactif formant le diazo est de l'acide nitrosylsulfurique.

9. Procédé de préparation du composé de teinture fugace, caractérisé en ce qu'on fait réagir le 2-amino-6-méthoxybenzothiazole avec de l'acide nitrosulfurique en présence d'une quantité d'eau inférieure à 10% en poids basée sur le poids total du mélange réactionnel et en présence de 0,1 à parties en poids d'acide minéral fort, rapportées au poids du 2-amino-6-méthoxybenzothiazole, pour former un composé diazo; en ce qu'on fait réagir un composé aromatique contenant de 6 à 24 atomes de carbone et au moins un résidu liant choisi parmi N, O, S et $CO_2$, avec un oxyde d'alkylène $C_{2-5}$ en quantité suffisante pour former de 2 à 400 unités d'oxyde d'alkylène pour former un composé contenant l'oxyde d'alkylène; et en ce qu'on copule le composé diazo et le composé contenant l'oxyde d'alkylène entre −10 et 20°C et à un pH de 2 à 4.

10. Procédé selon l'une des revendications 6 à 9, caractérisé en ce que l'acide minéral est l'acide phosphorique.

**Patentansprüche**

1. Eine Verbindung der Formel:

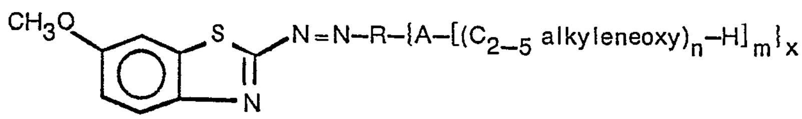

worin R für $C_{6-24}$-Arylen steht; m den Wert 1 oder 2 hat; A entweder für O, S oder $CO_2$ (in welchem Falle m den Wert 1 hat) oder aber für N steht (in welchem Falle m den Wert 2 hat); n eine ganze Zahl von 2 bis 400 bedeutet; x eine ganze Zahl von 1 bis 6 darstellt; und n.m.x $\leq$ 500 ist.

2. Eine Verbindung nach Anspruch 1, worin der Alkylenoxy- Bestandteil Ethylenoxy oder Propylenoxy oder ein Gemisch hievon ist.

3. Eine Verbindung nach Anspruch 1, worin A für N steht, der Alkylenoxy-Bestandteil Ethylenoxy ist und R aus meta-Toluidin-, meta-Aminophenol- und Anilinresten ausgewählt ist.

4. Eine Verbindung nach Anspruch 1, worin A für N steht, der Alkylenbestandteil Ethylenoxy ist und R einen 3,5-Dimethoxyanilinrest bedeutet.

5. Eine Verbindung nach Anspruch 3, worin R einen meta-Toluidinrest bedeutet.

6. Eine Verfahren zur Herstellung einer unechten Färbemittelverbindung, welches ein Umsetzen einer Diazo-Vorläufer-Verbindung mit einem Diazo-bildenden Reaktionsmittel in Gegenwarteiner starken Mineralsäure und von weniger als 10% Gew./Gew. Wasser, bezogen auf das Gewicht des Reaktionsgemisches, und wobei die Viskosität des Reaktionsgemisches kleiner als 12000 Centipoises (12 Pa.s) ist, und das Kuppeln der gebildeten Diazo-Verbindung mit einer aromatischen, Alkylenoxid-enthaltenden Verbindung umfaßt.

7. Ein Verfahren nach Anspruch 6, worin die Diazo-Vorläufer-Verbindung 2-Amino-6-methoxybenzothiazol ist.

8. Ein Verfahren nach Anspruch 6 oder 7, worin das Diazobildende Reaktionsmittel Nitrosylschwefelsäure ist.

9. Ein Verfahren zur Herstellung einer unechten Färbemittelverbindung, welches ein Umsetzen von 2-Amino-6-methoxybenzothiazol mit Nitrosylschwefelsäure in Gegenwart von weniger als 10 Gew./Gew. Wasser, bezogen auf das Gesamtgewicht des Reaktionsgemisches, und in Gegenwart von 0.1 bis 1 Gewichtsteilen einer Starken Mineralsäure je Gewichtsteil des 2-Amino-6-methoxybenzothiazols zur Ausbildung einer Diazo-Verbindung; ein Umsetzen einer 6 bis 24 Kohlenstoffatome und wenigstens eine Verknüpfungseinheit, ausgewählt unter N, O, S und $CO_2$, enthaltenden aromatischen Verbindung mit einem $C_{2-5}$-Alkylenoxid in einer zur Erzielung von 2 bis 400 Alkylenoxideinheiten an der genannten Verbindung ausreichenden Menge zur Ausbildung einer Alkylenoxid-enthaltenden Verbindung; und ein Kuppeln der Diazo-Verbindung mit der Alkylenoxid-enthaltenden Verbindung bei von −10 bis 20°C und bei einem pH-Wert von 2 bis 4 umfaßt.

10. Ein Verfahren nach einem der Ansprüche 6 bis 9, worin die Mineralsäure Phosphorsäure ist.